# EUROPEAN PATENT APPLICATION

(11) **EP 2 468 815 A1**
(43) Date of publication of application: **27.06.2012**
(21) Application number: 11193992.2
(22) Date of filing: 16.12.2011
(51) Int. Cl.: C08L 9/06, B60C 1/00

(54) **Reinforced rubber composition with combination of functionalized elastomer, liquid polymer and resin and tire with tread thereof**

(30) Priority: 21.12.2010 US 201013425330; 09.11.2011 US 201113292206
(71) Applicant: The Goodyear Tire & Rubber Company, Akron, OH 44316-0001 (US)
(72) Inventor: Sandstrom, Paul Harry, Cuyahoga Falls, OH Ohio 44223 (US); Fuchs, Hans-Bernd, D-54329 Konz (DE); Sandstrom, Erik Paul, Uniontown, OH Ohio 44685 (US)
(74) Representative: Kutsch, Bernd

(57) **Abstract**

A rubber composition is described comprising, based on parts by weight per 100 parts by weight elastomer (phr):
(A) solid conjugated diene-based elastomers having a number average molecular weight (Mn) of greater than 100,000 g/mol comprising styrene/butadiene elastomer (SBR) and at least one of cis 1,4- or trans 1,4-polybutadiene elastomers (BR), with a weight ratio of the SBR to the BR in a range of from 70/30 to 20/80;
wherein the SBR has a Tg in a range of from -40°C to 0°C, and contains 5 to 50 percent bound styrene;
wherein the BR has a Tg in a range of from -80°C to -110°C;
(B) 2 to 40 phr of liquid styrene/butadiene polymer (L-SBR) having a bound styrene content in a range of from 5 to 50 percent, a Tg in a range of from - 35°C to 0°C, and a number average molecular weight (Mn) in a range of from 1,000 to 50,000;
(C) 40 to 120 phr of particulate reinforcing filler; and
(D) 2 to 30 phr of resin having a glass transition temperature (Tg) or softening point temperature (Tm) in a range of from 50°C to 150°C.

## Description

### Field of the Invention

The invention relates to a rubber composition comprising a low Tg polybutadiene, particularly high cis 1,4-polybutadiene or high trans 1,4-polybutadiene with or without functional groups, and high Tg styrene/butadiene elastomers, particularly functionalized styrene/butadiene, elastomers, together with high Tg liquid unsaturated conjugated diene-based polymer, particularly styrene/butadiene polymer, which can also be functionalized, and high glass transition or softening point temperature (Tm or Tg) resins, particularly high Tg styrene/alpha methylstyrene resin. The invention also relates to a tire having a tread comprising such rubber composition.

### Background

Historically it has been proposed to use various liquid polymers which contain carbon-to-carbon double bond unsaturation to replace at least a portion of rubber processing oil in various rubber compositions. The philosophy was for the unsaturated liquid polymer to help reduce the viscosity of the uncured elastomer and to later co-vulcanize with the elastomer upon curing the rubber composition. For example, see US-A- 6,242,523.

Historically it has also been proposed to add various resin types to rubber compositions to improve traction. The philosophy was for the resin to provide a hysteretic response to the rubber composition to improve wet traction. For example, see US-A- 6,242,523.

However, it is desired in this invention to evaluate combining both liquid polymers and resins in a preferably high silica reinforced composition that contains a blend of specified styrene/butadiene and polybutadiene elastomers to provide a rubber composition for use as a tire tread which may possibly result in a significant improvement in both wet traction and treadwear (resistance to treadwear) performance for the tire tread. The ability to improve both of these two performance parameters for a tire tread application is extremely difficult. It is observed herein that the choice of liquid polymer, resin and elastomer types preferably used with silica reinforcement is a critical step for this inventive process.

The term "phr" as used herein, and according to conventional practice, refers to "parts of a respective material per 100 parts by weight of rubber elastomer". In the description of this invention, the terms "polymer", "rubber" and "elastomer" can be used interchangeably, unless otherwise distinguished. The terms "rubber composition", "compounded rubber" and "rubber compound" can be used interchangeably to refer to "rubber which has been blended or mixed with various ingredients and materials" and the terms "cure" and "vulcanize" may also be used interchangeably herein, unless otherwise noted and such terms are well known to those having skill in the rubber mixing or rubber compounding art. The term "Tg" relates to glass transition temperatures for the solid elastomer and liquid polymer. The resin may be referred to as being characterized by its glass transition temperature (Tg) or by its melting point temperature (Tm). The Tg and Tm can conveniently be determined by use of a differential scanning calorimeter (DSC) at a heating rate of 10°C, a method well known to those having skill in such art.

### Practice and Summary of the Invention

The invention relates to a rubber composition in accordance with claim 1, and to a tire in accordance with claim 12.

Dependent claims refer to preferred embodiments of the invention.

Preferably, this invention relates to novel rubber compositions which contain a combination of sulfur curable high molecular weight (molecular weight number average, or Mn, in terms of g/mol, greater than 100,000) styrene/butadiene (SBR) and 1,4-polybutadiene (BR) elastomers, high Tg unsaturated conjugated diene-based liquid polymers, particularly liquid styrene/butadiene polymers, having a low molecular weight (molecular weight number average, or Mn, in a range of from 1,000 to 50,000 g/mol), and a resin having a defined glass transition temperature or melting point temperature (Tg or Tm), which is primarily reinforced with silica filler.

For this invention, such liquid polymers preferably exclude liquid polybutadiene homopolymer, liquid block isoprene/butadiene copolymers, liquid polyalkylene block copolymers and liquid hydroxyl and epoxy functionalized polyalkylene polymers.

The term "liquid polymer" is intended to relate herein to polymers which are a pourable liquid or viscous fluid at room temperature (e.g. at 23°C).

Resins include polyterprene based resins and styrene/alpha methyl styrene resins, preferably a styrene/alpha methylstyrene resin and are preferably exclusive of aliphatic hydrocarbon resins.

The invention further relates to such rubber composition being sulfur cured and used as a tire tread component of a tire.

In one preferred embodiment of the invention, the silica reinforced rubber composition comprising the SBR and BR elastomers is sulfur cured in the presence of sulfur, at least one sulfur vulcanization accelerator, fatty acid and zinc oxide contained in said rubber composition as a dispersion thereof in an amount of from zero to 5 phr of zinc oxide, alternately in a range of from zero to 1 phr of zinc oxide, and alternately zero phr of said zinc oxide, namely to the exclusion of zinc oxide. Such fatty acid may be, for example stearic acid or combination of stearic, palmitic and oleic acids. Such exclusion of the zinc oxide (from sulfur curing such rubber composition) is considered herein as being a significant departure from past practice.

In accordance with a preferred aspect of this invention, a rubber composition is provided comprising, based on parts by weight per 100 parts by weight elastomer (phr):
(A) high molecular weight solid conjugated diene-based elastomers (e.g. an Mn of greater than 100,000 g/mol) comprising styrene/butadiene elastomer (SBR) and cis 1,4- or trans 1,4-polybutadiene elastomers (BR), particularly cis 1,4-polybutadiene elastomer, with a weight ratio of SBR to BR in a range of from 70/30 to 20/80, alternately 60/40 to 30/70;
   wherein at least one of said SBR and BR elastomers can be in a form of a functionalized elastomer;
   wherein said SBR has a Tg in a range of from -40°C to 0°C, alternately from - 30°C to -10°C and contains 5 to 50 percent bound styrene;
   wherein said BR has a Tg in a range of from -80°C to -110°C, alternately from -90°C to -105°C;
(B) 2 to 40 phr, alternately from 5 to 30 phr, liquid styrene/butadiene polymer (L-SBR) having a bound styrene content in a range of from 5 to 50 percent, a Tg in a range of from -35°C to 0°C, alternately from -30°C to -5°C, and a Mn molecular weight average in a range of from 1,000 to 50,000, alternately from 2,000 to 10,000 g/mol;
   wherein said liquid L-SBR polymer can be in a form of a functionalized elastomer;
(C) 40 to 120 phr of particulate reinforcing filler comprising:
   (1) silica such as precipitated silica, or
   (2) a combination of silica such as precipitated silica and rubber reinforcing carbon black comprisinh: 50 to 120, alternately from 50 to 100, phr of precipitated silica, and up to 50, alternately from 2 to 20, phr of rubber reinforcing carbon black, wherein the weight ratio of said precipitated silica to said rubber reinforcing carbon black is at least 2/1;
      together with a coupling agent for said precipitated silica having a moiety reactive with hydroxyl groups (e.g. silanol groups) on said precipitated silica and another different moiety interactive with said solid conjugated diene-based elastomers and said liquid styrene/butadiene (L-SBR) polymer;
(D) 2 to 30, alternately from 5 to 20, phr of resin having a glass transition temperature (Tg) or softening point temperature (Tm) in a range of from 50°C to 150°C, alternately from 60°C to 120°C.

In one embodiment, at least a portion of said SBR elastomer (the solid SBR) is a functionalized SBR (referred to herein as F-SBR) comprising functionalized elastomer of solution co-polymerization prepared styrene and 1,3-butadiene monomers. In such embodiment, said F-SBR has at least one functional group interactive with said silica, preferably precipitated silica, comprising at least one of:
(A) an amine group reactive with hydroxyl groups contained on a silica filler rubber reinforcement (referred to herein as an amine functionalized SBR), or
(B) a siloxy group reactive with hydroxyl groups contained on a silica filler rubber reinforcement (for example, alkoxy silane group as -Si(OR)₃), (which may be referred to herein as a siloxy functionalized SBR);
(C) a combination of amine and siloxy functional groups with the siloxy group being reactive with hydroxyl groups contained on said silica;
(D) silane/thiol combination of groups (which may be referred to herein as a silane/thiol functionalized SBR);
(E) hydroxyl groups reactive with hydroxyl groups contained on said silica (which may be referred to herein as a hydroxyl functionalized SBR); and
(F) epoxy groups reactive with hydroxyl groups contained on said silica (which may be referred to herein as an epoxy functionalized SBR).

In another embodiment, at least a portion of said SBR liquid polymer (the L-SBR) is a functionalized L-SBR (referred to herein as LF-SBR). In such embodiment, said LF-SBR has at least one functional group interactive with said silica comprising at least one of epoxy, amine, hydroxyl, carboxyl, maleic and malemide groups.

In another embodiment, said resin is a copolymer of styrene and alpha methylstyrene, namely a styrene/alpha methylstyrene, or alternately polyterpene, resin.

In further accordance with this invention such rubber composition is provided as being sulfur cured.

In further accordance with this invention, a tire is provided having a tread component comprising said sulfur cured rubber composition.

In additional accordance with this invention such silica reinforced rubber composition of said SBR and BR elastomers is provided as being sulfur cured in the absence of zinc oxide and in the presence of fatty acid comprising a combination of, or at least one of, stearic, palmitic and oleic acids.

In further accordance with this invention, said rubber composition may also contain natural or synthetic cis 1,4-polyisoprene rubber (e.g. 5 to 20 phr), if desired.

In further accordance with this invention, a tire is provided having a tread component comprising said sulfur cured rubber composition.

A significant aspect of this invention is the creation of a specific rubber composition which can be used to enable an improvement of both wet traction and resistance to treadwear (treadwear resistance) when used in a tire tread which is considered a difficult target to achieve.

This is considered herein to be significant and a departure from past practice in a sense of being able to put together various individual material technologies that would not be expected in each of their own individual applications to promote achievement of a desired goal of providing a combination of wet traction and treadwear resistance performance improvement when used in a tire tread application. Accomplishment of such goal would be considered as being both novel and discovered result for tire use.

The rubber compositions of this invention can be prepared by simply mixing the rubber composition in a conventional internal rubber mixer such as, for example, a Banbury mixer. This can be done utilizing a wide variety of mixing techniques as would be known by one having skill in such art.

In one embodiment, the liquid polymer can be added to the elastomer in a separate masterbatch or mixing process. In such case, it may be advantageous to mix the liquid polymer into the elastomer before it is compounded, or blended, with other materials, or ingredients, to achieve a benefit of improved processability during the preparation of the non-productive and productive compounds. It should be noted that the non-productive compounds do not contain a curative, such as sulfur, or accelerators for the curative. On the other hand, productive compounds contain a curative which will cure (vulcanize) the rubber after it is heated to a curing temperature.

The rubber compositions of this invention will frequently contain a variety of additional compounding ingredients and/or additives. Typical amounts of processing aids and rubber compounding ingredients comprise 1 to 50 phr. Such processing aids can include, for example, aromatic, naphthenic, and/or paraffinic processing oils. Stearic acid is typically referred to as a "rubber compounding ingredient". As purchased, it typically is comprising mainly a combination of stearic acid, palmitic and oleic acids. Such mixture is conventionally referred to in the rubber compounding art as "stearic acid". Typical amounts of antioxidants comprise 1 to 5 phr. Representative antioxidants may be, for example, diphenyl-p-phenylenediamine and others such as, for example, those disclosed in The Vanderbilt Rubber Handbook (1978), Pages 344 through 346. Typical amounts of antiozonants comprise 0.5 to 3 phr. Typical amounts of fatty acids, if used which can include stearic acid, comprise 0.5 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur-vulcanizing agent. Examples of suitable sulfur-vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur-vulcanizing agents are used in an amount ranging from 0.5 to 4 phr, or even, in some circumstances, up to 8 phr, with a range of from 1.5 to 3.5, sometimes from 2 to 2.5, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 2.8, phr. In another embodiment, combinations of a primary and a secondary accelerator might be used with the secondary accelerator being used in smaller amounts (of 0.05 to 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, sulfenamides, dithiocarbamates and xanthates. The rubber composition of this invention can also contain waxes in conventional amounts.

The silica generally employed in this invention are precipitated silicas, for example, those obtained by the acidification of a soluble silicate, e.g., sodium silicate and prepared in the presence of an electrolyte. Such silicas may, for example, have a BET surface area, as measured using nitrogen gas, in a range of 40 to 600, and more usually in a range of 50 to 300, square meters per gram.

Various precipitated silicas may be, for example, precipitated silicas from PPG Industries under the Hi-Sil trademark with designations 210 and 243; from Rhodia such as, for example, Zeosil 1165MP, and from Degussa with, for example, designations VN2 and VN3.

The coupling agent for use with the precipitated silica may, for example, comprising a bis(3-trialkoxysilylalkyl) polysulfide which contains an average of from 2 to 4, alternately an average of from 2 to 2.6 or an average of from 3.4 to 3.8, connecting sulfur atoms in its polysulfidic bridge. Representative of such coupling agent is for example, bis(3-triethoxysilylpropyl) polysulfide.

Alternately, such coupling agent may be an organomercaptosilane (e.g. an alkoxyorganomercaptosilane), and particularly an alkoxyorganomercaptosilane having its mercapto function capped.

Such coupling agent may, for example, be added directly to the elastomer mixture or may be added as a composite of precipitated silica and such coupling agent formed by treating a precipitated silica therewith.

Accordingly, said coupling agent may, for example, comprises a bis(3-trialkoxysilylalkyl) polysulfide which contains an average of from 2 to 4 connecting sulfur atoms in its polysulfidic bridge, an organomercaptosilane or a composite of precipitated silica treated with said coupling agent.

The following Example is provided to further illustrate the invention where the parts and percentages are by weight unless otherwise indicated.

### EXAMPLE I - Resin Evaluation

A series of rubber compositions were prepared to compare use of three individual resins, separately, for a primarily silica-reinforced rubber formulation comprising a combination of styrene/butadiene elastomer and cis 1,4-polybutadiene elastomer.

The resins evaluated for use in the rubber compositions are styrene/alpha methylstyrene resin (Resin A), aliphatic hydrocarbon resin (Resin B) and polyterpene resin (Resin C).

The following Table 1 reflects a formulation used for the evaluation. The parts and percentages, where used, are expressed in terms of weight unless otherwise indicated.

**Table 1**

| **Materials** | **Parts** |
|---|---|
| **Non Productive Mixing** | |
| Styrene/butadiene rubber¹ | 70 |
| Cis 1,4-polybutadiene rubber² | 30 |
| Resins A, B or C³ | 10 or 15 |
| Precipitated silica⁴ | 60 |
| Silica coupler (without carbon black)⁵ | 7 |
| Zinc oxide | 4 |
| Fatty acid⁶ | 4 |
| Rubber processing oil and wax | 17 |
| Rubber reinforcing carbon black⁷ | 5 |
| Antioxidant | 2 |
| **Productive Mixing** | |
| Sulfur | 1 |
| Accelerators⁸ | 5 |

| | |
|---|---|
| ¹Styrene/butadiene copolymer rubber, amine functionalized and tin coupled, as SE SLR 4601™ from Dow containing 21 percent bound styrene and having a vinyl content of 50 percent ²Cis 1,4-polybutadiene rubber as BUD1207™ from The Goodyear Tire & Rubber Company ³Resin A = styrene/alpha methylstyrene as Resin 2336™ from Eastman Chemical Resin B = aliphatic hydrocarbon resin as Sartomer S-155™ from Sartomer Resin C = polyterpene resin as Sylvares TR 7125™ from Arizona Chemical ⁴Precipitated silica as Zeosil Z1165 MP™ from Rhodia ⁵Silica coupler as Si266™ from Evonic comprised of bis(3-triethoxysilylpropyl) polysulfide having an average sulfur content in its polysulfidic bridge in a range from 2.1 to 2.6 ⁶Comprised of stearic, oleic and palmitic acids ⁷N550 rubber reinforcing carbon black, an ASTM designation ⁸Sulfenamide and diphenyl guanidine sulfur cure accelerators | |

The rubber compositions are referred to as rubber Samples A through F.

Rubber Samples A and D contained the styrene/alpha methylstyrene resin (Resin A) in amounts of 10 and 15 phr, respectively. Rubber Samples B and E contained the aliphatic hydrocarbon resin (Resin B) in amounts of 10 and 15 phr, respectively. Rubber Samples C and F contained the polyterpene resin (Resin C) in amounts of 10 and 15 phr, respectively.

The Samples are prepared in a sequential stage mixing process in an internal rubber mixer, namely at least one non-productive mixing stage followed by a productive mixing stage.

The non-productive mixing stage(s) is conducted to a temperature of 160 to 165°C.

The sulfur curative and accelerator(s) are added in the productive mixing stage and mixed to a temperature of 110°C. Ingredients have been reported in Table 1.

Various physical properties are reported in the following Table 2 in which the parts and percentages are by weight unless otherwise indicated.

The following Table 2 is provided for the above rubber Samples A through F to report various physical properties and extent of balance between wet traction, rolling resistance and resistance to wear properties in which the parts and percentages are by weight unless otherwise indicated.

**Table 2**

| **Rubber Samples** | **Control** | | **Experimental** | | | |
|---|---|---|---|---|---|---|
| | **A** | **B** | **C** | **D** | **E** | **F** |
| Resin A, styrene/alpha methylstyrene (phr) | 10 | 0 | 0 | 15 | 0 | 0 |
| Resin B aliphatic hydrocarbon (phr) | 0 | 10 | 0 | 0 | 15 | 0 |
| Resin C polyterpene (phr) | 0 | 0 | 10 | 0 | 0 | 15 |
| **Wet Traction Indication (For Tread Running Surface) - Lower Is Better** | | | | | | |
| Cold (0°C) Rebound value | 15 | 15 | 15 | 14 | 15 | 14 |
| **Abrasion Resistance (Wear Resistance Indicator) - Lower is Better** | | | | | | |
| Grosch² rate of abrasion (mg/km) | | | | | | |
| High severity (70N), 16°slip angle, disk | | | | | | |
| speed = 20 km/hr, distance = 500 m | 501 | 530 | 515 | 511 | 560 | 545 |
| **Rolling Resistance Indication** | | | | | | |
| Hot rebound (100°C) value | | | | | | |
| (Higher is better) | 54 | 52 | 55 | 56 | 52 | 52 |
| Tan delta (100°C), 10% strain, 11 Hz | | | | | | |
| (Lower is better) | 0.16 | 0.18 | 0.17 | 0.17 | 0.21 | 0.21 |

| | | | | | | |
|---|---|---|---|---|---|---|
| ¹Rubber Process Analyzer (RPA) ²Grosch abrasion rate determination was run on an LAT-1 00 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high severity test was conducted at a load of 70 Newtons, a slip angle of 12 degrees and a disk speed of 20 km/hr and a sample travel distance of 250 meters. | | | | | | |

### Discussion for Table 2 Data

### Rubber Samples A, B and C with 10 phr of Each of Resins A, B and C

(1) Wet Traction: at the 10 phr resin level, all of the rubber Samples have the same predictive wet traction with a cold Rebound Value (0°C) of 15
(2) Wear Resistance: at the 10 phr resin level (Sample A), use of resin A resulted in the best wear resistance value of 501 mg/km (lower is better)
(3) Rolling Resistance: at the 10 phr resin level, resins A and C are seen to provide equivalent rolling resistance values whereas use of resin B is seen to provide a worse rolling resistance value.

### Rubber Samples A, B and C with 15 phr of Each of Resins A, B and C

(1) Wet Traction: at the 15 phr resin level, all of the rubber Samples have similar predictive wet traction with a cold Rebound Value (0°C) of 14-15
(2) Wear Resistance: at the 15 phr resin level, as was also observed for the 10 phr level, use of resin A (Sample D) resulted in the best wear resistance value of 511 mg/km (lower is better)
(3) Rolling Resistance: at the 15 phr resin level, resin A (Sample D) provided the best rolling resistance value of 56 (higher is better)

Accordingly, it is concluded that when comparing use of Resins A, B and C at 10 and 15 phr levels, the best combination of the predicted wet traction, rolling resistance and wear resistance values was obtained with Resin A, namely the styrene/alpha methylstyrene resin, although results from use of the polyterpene resin (C) somewhat closely approximated use of the styrene/alpha methylstyrene resin in some circumstances and might be therefore suitable in appropriate circumstances.

### EXAMPLE II - Liquid Unsaturated Polymer and Resin Evaluation

With favorable results observed for use of Resin A observed in Example I, where the styrene/alpha methylstyrene resin showed an optimum balance between predictive wet traction and wear resistance, with minimal loss of rolling resistance, Resin A was further evaluated in this Example in rubber compositions wherein a liquid unsaturated polymer, referred to in this Example as Liquid Polymer A, was used to replace a part of the rubber processing oil as indicated in the formulation shown in the following Table 3.

**Table 3**

| **Materials** | **Parts** |
|---|---|
| Non Productive Mixing | |
| Functionalized styrene/butadiene rubber⁹ | 70 or 55 |
| Cis 1,4-polybutadiene rubber² | 30 or 45 |
| Precipitated silica⁴ | 65 |
| Silica coupler⁵ | 5 |
| Zinc oxide | 3.5 |
| Fatty acid⁶ and microcrystalline wax | 3.5 |
| Rubber processing oil¹⁰ | 1 to 20 |
| Resins A³ | 0 to 10 |
| Liquid polymer A¹¹ | 0 or 9 |
| Rubber reinforcing carbon black⁷ | 4 |
| Antioxidant | 2 |
| **Productive Mixing** | |
| Sulfur | 1.7 |
| Sulfur cure accelerators⁸ | 3 |

| | |
|---|---|
| Footnotes are the same as those used for the previous Table except for the following: ⁹Styrene/butadiene copolymer rubber, siloxyl functionalized and tin coupled, as SE SLR 4630™ from Dow having a Tg of -23°C ¹⁰Rubber processing oil as Naprex 38 from ExxonMobil Company ¹¹Liquid solution polymerization prepared styrene/butadiene polymer containing carbon-to-carbon double bond unsaturation in its butadiene portion and having a Tg of -15°C as Ricon 100 from the Cray Valley company having a molecular weight (Mn) value of 4500 g/mol. | |

The rubber compositions were vulcanized in a suitable mold by heating for 14 minutes at a temperature of 160°C.

Various physical properties of the vulcanized rubber compositions are shown in the following Table 4 as rubber Samples G through N.

Rubber Samples H, K and N contained the liquid polymer A

Rubber Samples K and N contained a combination of Resin A and Liquid Polymer A.

**Table 4**

| | **Samples** | | | | | | | |
|---|---|---|---|---|---|---|---|---|
| | **G** | **H** | **I** | **J** | **K** | **L** | **M** | **N** |
| SBR rubber, SBR, (phr) | 70 | 70 | 70 | 70 | 70 | 55 | 55 | 55 |
| Polybutadiene rubber, BR, (phr) | 30 | 30 | 30 | 30 | 30 | 45 | 45 | 45 |
| Resin A, styrene/alpha | | | | | | | | |
| methyl styrene, (phr) | 0 | 0 | 5 | 10 | 10 | 5 | 10 | 10 |
| Liquid polymer A (phr) | 0 | 9 | 0 | 0 | 9 | 0 | 0 | 9 |
| Rubber processing oil (phr) | 20 | 11 | 15 | 10 | 1 | 15 | 10 | 1 |
| **Wet Traction (For Tread Running Surface) Indicator (Lower is Better)** | | | | | | | | |
| Cold Rebound (°C) value | 25 | 20 | 20 | 17 | 13 | 28 | 24 | 20 |
| Abrasion Resistance (Wear Resistance Indicator), (Lower is Better) | | | | | | | | |
| Grosch abrasion rate (mg/km), | High | | | | | | | |
| severity (70N), 16° slip angle, | Disk | | | | | | | |
| speed 20 km/hr, | | | | | | | | |
| distance 500 m | 572 | 562 | 585 | 531 | 561 | 518 | 511 | 478 |
| **Rolling Resistance Predictor** | | | | | | | | |
| Hot rebound (100°C), | | | | | | | | |
| (Higher is Better) | 62 | 61 | 63 | 64 | 60 | 60 | 61 | 58 |
| Tan delta, 100%, 10% strain, | | | | | | | | |
| 11 Hz (Lower is Better) | 0.09 | 0.10 | 0.07 | 0.08 | 0.08 | 0.0 | 0.09 | 0.10 |

Table 4 contains two separate SBR/BR blend compositions. The first blend ratio of 70/30 was used in rubber Samples G through K, whereas the second blend ratio of 55/45 was used in rubber Samples L through N.

The results clearly show the best performance based on a combination of predictive wet traction and resistance to abrasion was observed for rubber Sample K in the SBR/BR blend ratio of 70/30 and for rubber Sample N for the SBR/BR 55/45 blend ratio.

Samples K and N contain the combination of Resin A and the Liquid Polymer A having a Tg of -15°C and an Mn molecular weight value of 4500 g/mol.

The remainder of the rubber Samples which contained either the Resin A or the Liquid Polymer A alone did not exhibit as significant improvement of a combination of wet traction and abrasion resistance predictors.

The beneficial results of a combination of predictive wet traction and resistance to abrasion for rubber Samples K and N, using the combination of Resin A and Polymer A, were surprising and considered herein to not be predictive without considerable experimentation.

### EXAMPLE III - Alternative Liquid Unsaturated Polymer and Resin Evaluation

With favorable results observed in Example II for the use of the combination of Resin A, the styrene/alpha methylstyrene resin, together with the Liquid Polymer as a liquid SBR polymer having a Tg of -15°C and an Mn molecular weight value of 4500 g/mol to achieve an improved balance between predictive wet traction and wear (abrasion) resistance, alternative liquid polymers A, B, C and D were evaluated for use with Resin A as indicated in the formulation reported in the following Table 5.

**Table 5**

| **Materials** | **Parts by weight** |
|---|---|
| **Non Productive Mixing** | |
| Styrene/butadiene elastomer¹ | 70 or 55 |
| Cis 1,4-polybutadiene elastomer² | 30 or 45 |
| Precipitated silica³ | 65 |
| Silica coupler⁴ | 5 |
| Zinc oxide | 3.5 |
| Fatty acid⁵ and microcrystalline wax | 3.5 |
| Rubber processing oil⁶ | 1, 10 or 20 |
| Resin A, styrene/alpha methylstyrene resin⁷ | 0 or 10 |
| Liquid polymer A, B, C or D⁸ | 0 to 9 |
| Rubber reinforcing carbon black⁹ | 4 |
| Antioxidant | 2 |
| **Productive Mixing** | |
| Sulfur | 1.7 |
| Sulfur cure accelerators¹⁰ | 3 |

| | |
|---|---|
| ⁸Liquid polymers | |

Liquid SBR polymer A as Ricon 100 from Cray Valley having a Tg of -15°C, a molecular weight value (Mn) g/mol of 4500 and styrene content of 21 percent

Liquid PBD polymer B as Ricon 156 from Cray Valley having a Tg of -56°C, a molecular weight value (Mn) g/mol of 1400 and a vinyl content of 70 percent

Liquid PBD polymer C as Ricon 157 from Cray Valley having a Tg of -51 °C, a molecular weight value (Mn) g/mol of 1800 and a vinyl content of 70 percent

Liquid SBR polymer D as PRO10993 from Cray Valley having a Tg of -19°C, a molecular weight value (Mn) g/mol of 2400 and styrene content of 22 percent

Rubber Samples O through T were prepared.

Rubber Sample O, a 70/30 blend of SBR/BR, was a Control rubber Sample in a sense that it did not contain Resin A or any of the Liquid Polymers.

Rubber Sample P, a 55/45 blend of SBR/BR, was a Comparative rubber Sample in a sense that it contained Resin A without any of the Liquid Polymers and a different ratio of SBR and BR. Rubber samples Q-T also contained a 55/45 blend of SBR and BR.

Rubber Sample Q contained the Liquid Polymer A as well as Resin A.

Rubber Sample R contained the Liquid Polymer B as well as Resin A.

Rubber Sample S contained the Liquid Polymer C as well as Resin A.

Rubber Sample T contained the Liquid Polymer D as well as Resin A.

The rubber compositions (Samples) were vulcanized in a suitable mold by heating for 14 minutes at a temperature of 150°C.

Various physical properties of the vulcanized rubber compositions are shown in the following Table 6 for rubber Samples O through T, with rubber Sample O being the Control rubber Sample without any of Resin A or Liquid polymer.

**Table 6**

| | **Parts by Weight, phr** | | | | | |
|---|---|---|---|---|---|---|
| | **O** | **P** | **Q** | **R** | **S** | **T** |
| Styrene/butadiene elastomer¹ | 70 | 55 | 55 | 55 | 55 | 55 |
| Cis 1,4-polybutadiene elastomer² | 30 | 45 | 45 | 45 | 45 | 45 |
| Resin A, styrene/alpha methyl styrene resin | 0 | 10 | 10 | 10 | 10 | 10 |
| Liquid SBR polymer A, Tg -20°C, Mn 4500 g/mol | 0 | 0 | 9 | 0 | 0 | 0 |
| Liquid PBD polymer B, Tg -56°C, Mn 1400 g/mol | 0 | 0 | 0 | 9 | 0 | 0 |
| Liquid PBD polymer C, Tg -51°C, Mn 1800 g/mol | 0 | 0 | 0 | 0 | 9 | 0 |
| Liquid SBR polymer D, Tg -19°C, Mn 2400 g/mol | 0 | 0 | 0 | 0 | 0 | 9 |
| Rubber processing oil | 20 | 10 | 1 | 1 | 1 | 1 |
| **Wet Traction (For Tread Running Surface) Indicator (Lower is Better)** | | | | | | |
| Cold Rebound (°C) value | 24 | 25 | 19 | 22 | 22 | 20 |
| Abrasion Resistance (Wear Resistance Indicator), (Lower is Better) | | | | | | |
| Grosch abrasion rate (mg/km) High severity | | | | | | |
| (70N), 16° slip angle, disk speed = 20 km/hr, | | | | | | |
| distance = 500 m | 554 | 486 | 467 | 498 | 482 | 480 |
| **Rolling Resistance Predictor** | | | | | | |
| Hot rebound (100°C), (Higher is Better) | 66 | 64 | 61 | 62 | 62 | 62 |
| Tan delta, 100%, 10% strain, 11 Hz | | | | | | |
| (Lower is Better) | 0.121 | 0.138 | 0.152 | 0.150 | 0.144 | 0.149 |

In Table 6, focusing on a desire, or target, motivated by results obtained in Examples I and II, of a combination of improved wet traction and abrasion resistance as compared to Control O, it is clearly evident that Samples Q and T, which contain Resin A and liquid SBR polymers A and D, provide the best combination of wet traction and abrasion resistance. It is also surprising that the use of a higher level of BR, namely 30 to 45 phr, which helps to improve abrasion resistance and would normally cause a sharp loss of wet traction, did not impact the predictive wet traction, namely the cold Rebound value, when the Resin A and liquid polymers were added to the rubber compositions, wherein the liquid polymers were used to replace conventional processing oil.

In contrast, Samples R and S which also contain Resin A, but instead liquid PBD polymers B and C are inferior in wet traction and abrasion resistance when compared together versus Samples Q and T which contain Resin A and liquid SBR polymers A and D. These results suggest that the indicated liquid SBR polymers are favored for this inventive application to promote the combination of wet traction and resistance to wear promotion particularly when used in combination with Resin A, a copolymer of styrene and alpha methylstyrene.

The observed results also favor the higher molecular weight liquid SBR polymer as compared to liquid SBR polymer D for promoting resistance to abrasion.

### EXAMPLE IV - Evaluation of Additional Resins and the SBR liquid polymer A

With favorable results observed in Example III for the use of the combination of Resin A, the styrene/alpha methylstyrene resin, together with the Liquid Polymer as a liquid SBR polymer having a Tg of -15°C and an Mn molecular weight value of 4500 g/mol to achieve an improved balance between predictive wet traction and wear (abrasion) resistance, alternative resins B, C and D were evaluated for use with the Liquid Polymer as indicated in the formulation reported in the following Table 7.

**Table 7**

| **Materials** | **Parts by weight (phr)** |
|---|---|
| **Non Productive Mixing** | |
| Styrene/butadiene elastomer (SBR)¹ | 70 or 50 |
| Cis 1,4-polybutadiene elastomer (BR)² | 30 or 50 |
| Precipitated silica³ | 65 |
| Silica coupler⁴ | 5 |
| Zinc oxide | 3.5 |
| Fatty acid⁵ and microcrystalline wax | 3.5 |
| Rubber processing oil⁶ | 0 or 9 |
| Resin A, B, C or D⁷ | 0 or 10 |
| Liquid polymer A⁸ | 0 to 9 |
| Rubber reinforcing carbon black⁹ | 4 |
| Antioxidant | 2 |
| **Productive Mixing** | |
| Sulfur | 1.7 |
| Sulfur cure accelerators¹⁰ | 3 |

| | |
|---|---|
| ⁷Resins | |

Resin A as styrene/alpha methylstyrene as Resin 2336™ from Eastman Chemical, glass transition temperature (Tg) of 85°C

Resin B as Cyclized Polyisoprene as Alpex CK514 from Cytec Chemical Company, glass transition temperature (Tg) of 110°C

Resin C as polyterpene resin as Sylvares TR 7125™ from Arizona Chemical, glass transition temperature (Tg) of 125°C

Resin D as polyterpene/phenol resin as Dertophene from D.R.T Chemical Company, glass transition temperature (Tg) of 115°C

The rubber compositions were vulcanized in a suitable mold by heating for 14 minutes at a temperature of 150°C. Various physical properties of the vulcanized rubber compositions are shown in the following Table 8 for rubber Samples U through Z.

Rubber Samples U and V are Control rubber Samples without Resin A or Liquid polymer. Rubber Sample U contains a 70/30 blend of SBR and BR, whereas rubber Sample V contains a 50/50 blend of SBR and BR. Rubber Samples W through -Z also contain a 50/50 blend of SBR and BR.

**Table 8**

| | **Parts by weight, phr** | | | | | |
|---|---|---|---|---|---|---|
| | **U** | **V** | **W** | **X** | **Y** | **Z** |
| SBR elastomer | 70 | 50 | 50 | 50 | 50 | 50 |
| Polybutadiene elastomer (BR) | 30 | 50 | 50 | 50 | 50 | 50 |
| Resin A, styrene/alpha methyl styrene resin | 0 | 0 | 10 | 0 | 0 | 0 |
| Liquid SBR polymer A, Tg -15°C, 4500 g/mol | 0 | 0 | 9 | 9 | 9 | 9 |
| Resin B, Cyclized polyisoprene resin | 0 | 0 | 0 | 10 | 0 | 0 |
| Resin C, polyterpene resin | 0 | 0 | 0 | 0 | 10 | 0 |
| Resin D, terpene/phenol copolymer resin | 0 | 0 | 0 | 0 | 0 | 10 |
| Rubber processing oil | 20 | 20 | 1 | 1 | 1 | 1 |
| **Wet Traction (For Tread Running Surface) Indicator (Lower is Better)** | | | | | | |
| Cold Rebound (°C) value | 26 | 36 | 23 | 25 | 23 | 23 |
| Abrasion Resistance (Wear Resistance Indicator), (Lower is Better) | | | | | | |
| Grosch abrasion rate (mg/km) High severity | | | | | | |
| (70N), 16 slip angle, disk speed = | | | | | | |
| 20 km/hr, distance = 500 m | 504 | 477 | 435 | 497 | 432 | 442 |
| **Rolling Resistance Predictor** | | | | | | |
| Hot rebound (100°C), (Higher is Better) | 67 | 65 | 63 | 55 | 61 | 62 |
| Tan delta, 100%, 10% strain, 11 Hz | | | | | | |
| (Lower is Better) | 0.11 | 0.13 | 0.13 | 0.16 | 0.14 | 0.14 |

A comparison of Samples U and V, which represents an increase of BR from 30 to 50 phr, gave a predicted improvement of abrasion resistance with a predicted loss of wet traction. Samples W through Z, which also contain the 50 phr level of BR, exhibit a predictive wet traction (cold rebound) better than the control sample U, which contains a 70/30 blend of SBR and BR, and also improved abrasion resistance prediction. Samples W and Y show the best combination of wet traction and abrasion resistance prediction, with sample W favoring better predictive rolling resistance than Sample Y. The discovery becomes obvious from these results that one can increase the level of BR, add a specified resin and replace oil with specified liquid polymers to achieve the unexpected improvement of both wet traction and abrasion resistance with minimum loss of rolling resistance when such compound are contemplated as being used in passenger tread applications.

### EXAMPLE V

### Evaluation of Functional and Non-functional SBR with Resin and liquid SBR polymer

With favorable results observed in Example II for the use of the combination of Resin A and the styrene/alpha methylstyrene resin, together with the Liquid Polymer as a liquid SBR polymer having a Tg of -15°C and an Mn molecular weight value of 4500 g/mol to achieve an improved balance between predictive wet traction and wear (abrasion) resistance, use of a functionalized SBR as an alternative to the SBR of the rubber composition was evaluated as indicated in the formulation reported in the following Table 9.

**Table 9**

| **Materials** | **Parts by weight** |
|---|---|
| **Non Productive Mixing** | |
| Functionalized SBR (F-SBR)⁹ | 70, 50 or 0 |
| Non-Functionalized SBR (NF-SBR)¹² | 50 or 0 |
| Cis 1,4-polybutadiene rubber² | 30 or 50 |
| Precipitated silica³ | 65 |
| Silica coupler⁴ | 5 |
| Zinc oxide | 3.5 |
| Fatty acid⁵ and microcrystalline wax | 3.5 |
| Rubber processing oil⁶ | 0 or 20 |
| Resin A¹¹ | 0 or 10 |
| Liquid polymer A⁸ | 0 to 10 |
| Rubber reinforcing carbon black⁹ | 4 |
| Antioxidant | 2 |
| **Productive Mixing** | |
| Sulfur | 1.7 |
| Sulfur cure accelerators¹⁰ | 3 |

| | |
|---|---|
| ⁹Styrene/butadiene copolymer rubber, siloxyl functionalized and tin coupled, as SE SLR 4630™ from Dow having a Tg of -23°C ¹²Styrene/butadiene copolymer rubber, no siloxyl fictionalization, but tin coupled, as a modified version of SE SLR 4630™ from Dow having a Tg of -23°C | |

The rubber compositions were vulcanized in a suitable mold by heating for 14 minutes at a temperature of 150°C.

Various physical properties of the vulcanized rubber compositions are shown in the following Table 10 for rubber Samples AA, BB and CC.

Rubber Samples AA and BB contained a functionalized SBR (F-SBR) whereas rubber Sample CC contained a non-functionalized SBR (NF-SBR). Rubber

Sample AA was a Control rubber Sample which did not contain a combination of Resin and Liquid Polymer. Rubber Samples BB and CC were Experimental rubber Samples.

**Table 10**

| | **Parts by weight, phr** | | |
|---|---|---|---|
| | **AA** | **BB** | **CC** |
| F-SBR Elastomer | 70 | 50 | 0 |
| NF-SBR Elastomer | 0 | 0 | 50 |
| Polybutadiene rubber | 30 | 50 | 50 |
| Resin A, styrene/alpha methyl styrene resin | 0 | 10 | 10 |
| Liquid SBR polymer A, Tg -15°C, Mn 4500 g/mol | 0 | 10 | 10 |
| Rubber processing oil | 20 | 0 | 0 |
| **Wet Traction (For Tread Running Surface) Indicator (Lower is Better)** | | | |
| Cold Rebound (°C) value | 24 | 22 | 21 |
| Abrasion Resistance (Wear Resistance Indicator), (Lower is Better) | | | |
| Grosch abrasion rate (mg/km) High severity (70N), | | | |
| 16° slip angle, disk speed = 20 km/hr, | | | |
| distance = 500 m | 569 | 491 | 494 |
| **Rolling Resistance Predictor** | | | |
| Hot rebound (100°C), (Higher is Better) | 65 | 60 | 58 |
| Tan delta, 100%, 10% strain, 11 Hz (Lower is Better) | 0.110 | 0.123 | 0.140 |

It can be seen from Table 10 that the functionalized and non-functionalized SBR gave similar predictive wet traction (cold rebound values) and abrasion resistance values, however the functionalized SBR (Sample BB) gave a better predictive rolling resistance based on hot rebound and tan delta values.

This is considered as being significant in a sense of obtaining the best overall performance for wet traction and abrasion resistance combined with rolling resistance for a tire with a tread of such rubber composition.

### Example VI

With favorable results observed in Example II for the use of the combination of Resin A and the styrene/alpha methylstyrene resin, together with the Liquid Polymer as a liquid SBR polymer having a Tg of -15°C and an Mn molecular weight value of 4500 g/mol to achieve an improved balance between predictive wet traction and wear (abrasion) resistance, an evaluation of use, or non use, of zinc oxide was undertaken and evaluated as indicated in the formulation reported in the following Table 11.

**Table 11**

| **Materials** | **Parts by weight** |
|---|---|
| **Non Productive Mixing** | |
| Styrene/butadiene rubber⁹ | 70 or 50 |
| Cis 1,4-polybutadiene rubber² | 30 or 50 |
| Precipitated silica³ | 65 |
| Silica coupler¹² | 5 |
| Zinc oxide | 0 or 3.5 |
| Fatty acid⁵ and microcrystalline wax | 3.5 |
| Rubber processing oil⁶ | 4 or 17 |
| Resin A¹¹ | 0 or 10 |
| Liquid polymer A⁸ | 0 or 9 |
| Rubber reinforcing carbon black⁹ | 4 |
| Antioxidant | 2 |
| **Productive Mixing** | |
| Sulfur | 1.7 |
| Sulfur cure accelerators¹⁰ | 3 |

| | |
|---|---|
| ¹²Silica coupling agent as the liquid version of Si-69 without its carbon black carrier from Degussa comprised of bis(3-triethoxysilylpropyl) polysulfide containing an average of from 3.5 to 3.8 connecting sulfur atoms in its polysulfidic bridge reported in the Table in terms of the coupling agent instead of the composite. | |

The rubber compositions were vulcanized in a suitable mold by heating for 14 minutes at a temperature of 150°C.

Various physical properties of the vulcanized rubber compositions are shown in the following Table 12 for rubber Samples DD, EE and FF.

**Table 12**

| | **Parts by weight, phr** | | |
|---|---|---|---|
| | **DD** | **EE** | **FF** |
| Functionalized SBR elastomer (F-SBR) | 70 | 50 | 50 |
| Polybutadiene rubber (BR) | 30 | 50 | 50 |
| Resin A, styrene/alpha methylstyrene resin | 0 | 10 | 10 |
| Liquid SBR polymer A, Tg -15°C, Mn 4500 g/mol | 0 | 9 | 9 |
| Rubber processing oil | 17 | 4 | 4 |
| Zinc Oxide | 3.5 | 3.5 | 0 |
| **Wet Traction (For Tread Running Surface) Indicator (Lower is Better)** | | | |
| Cold Rebound (°C) value | 26 | 26 | 25 |
| Abrasion Resistance (Wear Resistance Indicator), (Lower is Better) | | | |
| Grosch abrasion rate (mg/km) High severity (70N), | | | |
| 16° slip angle, disk speed = 20 km/hr, | | | |
| distance = 500 m | 502 | 503 | 383 |
| **Rolling Resistance Predictor** | | | |
| Hot rebound (100°C), (Higher is Better) | 70 | 68 | 66 |
| Tan delta, 100%, 10% strain, 11 Hz | | | |
| (Lower is Better) | 0.094 | 0.09 | 0.092 |

Sample DD is a silica reinforced Control rubber Sample with elastomers comprising 70 phr functionalized SBR (F-SBR) and 30 phr cis 1,4-polybutadiene together with 3.5 phr of zinc oxide and without Resin A and liquid SBR polymer.

Experimental rubber Sample FF is a silica reinforced Experimental rubber comprising 50 phr functionalized SBR (F-SBR) and 50 phr cis 1,4-polybutadiene together with a combination of 10 phr of styrene/alpha methylstyrene resin and 9 phr of liquid SBR polymer and 3.5 phr of zinc oxide.

Experimental rubber Sample FF is the same as Experimental rubber Sample EE except that it does not contain zinc oxide.

Surprisingly, it can readily be seen from Table 11 that a significant and discovered improvement is evident for abrasion resistance of sample FF, with the sulfur vulcanized silica reinforced rubber composition of the F-SBR and BR elastomers with sulfur and sulfur vulcanization accelerators together with the fatty acid comprised of a combination of stearic, palmitic and oleic acids exclusive of the presence of the zinc oxide, as compared to sample EE which contained a more conventional presence of 3.5 phr of zinc oxide.

Indeed, the Grosch abrasion value is observed to be reduced from 503 mg/km for rubber Sample EE to a value of only 383 mg/km for Experimental rubber Sample FF which represents a beneficial 23 percent reduction in abrasion resistance value.

The mechanism of such surprising result of increase in abrasion resistance effect is not fully understood and is considered herein as being a significant discovery.

## Claims

1. A rubber composition comprising, based on parts by weight per 100 parts by weight elastomer (phr):
(A) solid conjugated diene-based elastomers having a number average molecular weight (Mn) of greater than 100,000 g/mol comprising styrene/butadiene elastomer (SBR) and at least one of cis 1,4- or trans 1,4-polybutadiene elastomers (BR), with a weight ratio of the SBR to the BR in a range of from 70/30 to 20/80;
wherein the SBR has a Tg in a range of from -40°C to 0°C, and contains 5 to 50 percent bound styrene;
wherein the BR has a Tg in a range of from -80°C to -110°C;
(B) 2 to 40 phr of liquid styrene/butadiene polymer (L-SBR) having a bound styrene content in a range of from 5 to 50 percent, a Tg in a range of from - 35°C to 0°C, and a number average molecular weight (Mn) in a range of from 1,000 to 50,000;
(C) 40 to 120 phr of particulate reinforcing filler; and
(D) 2 to 30 phr of resin having a glass transition temperature (Tg) or softening point temperature (Tm) in a range of from 50°C to 150°C.

2. The rubber composition of claim 1 wherein the particulate reinforcing filler is:
(1) silica, preferably precipitated silica; or
(2) a combination of silica, preferably precipitated silica, and rubber reinforcing carbon black, the combination comprising 50 to 120 phr of silica and up to 50 phr of rubber reinforcing carbon black, and wherein the weight ratio of the silica to the rubber reinforcing carbon black is at least 2/1, together with a coupling agent for the silica having a moiety reactive with hydroxyl groups on the silica and another different moiety interactive with the solid conjugated diene-based elastomers and the liquid styrene/butadiene polymer.

3. The rubber composition of claim 1 or 2 wherein the rubber composition is sulfur cured in the presence of sulfur, at least one sulfur vulcanization accelerator, a fatty acid comprising at least one of stearic acid, palmitic and oleic acid.

4. The rubber composition of claim 3 wherein the rubber composition is sulfur cured also in the presence of zinc oxide contained in the rubber composition as a dispersion thereof in an amount of from zero to 5 phr, alternatively from 0.5 to 3 phr.

5. The rubber composition of claim 1, 2 or 3 wherein the rubber composition is sulfur cured exclusive of zinc oxide.

6. The rubber composition of at least one of the previous claims wherein the resin is a copolymer of styrene and alpha methylstyrene.

7. The rubber composition of at least one of the previous claims wherein at least a portion of the SBR is a functionalized SBR comprising a functionalized elastomer of solution co-polymerization prepared elastomer of styrene and 1,3-butadiene monomers, and wherein the functionalized elastomer has at least one functional group interactive with silica, the functional group comprising at least one of:
(A) an amine group reactive with hydroxyl groups contained on a silica filler rubber reinforcement; or
(B) a siloxy group reactive with hydroxyl groups contained on a silica filler rubber reinforcement;
(C) a combination of amine and siloxy functional groups with the siloxy group being reactive with hydroxyl groups contained on silica;
(D) a silane/thiol combination of groups;
(E) hydroxyl groups reactive with hydroxyl groups contained on silica; and
(F) epoxy groups reactive with hydroxyl groups contained on silica.

8. The rubber composition of at least one of the previous claims wherein at least a portion of the SBR liquid polymer is a functionalized SBR having at least one functional group interactive with silica comprising at least one of epoxy, amine, hydroxyl, carboxyl, maleic and malemide groups.

9. The rubber composition of claim 7 or 8 wherein the rubber composition is sulfur cured in the presence of fatty acid comprising at least one of stearic, palmitic and oleic acid and is exclusive of the presence of zinc oxide.

10. The rubber composition of claim 9 wherein the resin is a copolymer of styrene and alpha methylstyrene.

11. The rubber composition of claim 2 wherein the coupling agent comprises a bis(3-trialkoxysilylalkyl) polysulfide which contains an average of from 2 to 4 connecting sulfur atoms in its polysulfidic bridge, an organomercaptosilane or a composite of silica treated with said coupling agent.

12. A tire having a component, the component comprising the rubber composition of at least one of the previous claims.

13. The tire of claim 12 wherein the component is a tread.
